# EUROPÄISCHE PATENTSCHRIFT

(11) **EP 3 141 433 B1**
(45) Veröffentlichungstag und Bekanntmachung des Hinweises auf die Patenterteilung: **29.08.2018**
(21) Anmeldenummer: 16187847.5
(22) Anmeldetag: 08.09.2016
(51) Int. Cl.: B60R 16/037, B60R 25/24

(54) **VERFAHREN ZUM BETRIEB EINES FAHRERASSISTENZSYSTEMS ZUR UNTERSTÜTZUNG VON WENIGSTENS EINER PERSON AUSSERHALB EINES KRAFTFAHRZEUGS**
METHOD FOR OPERATING A DRIVER ASSISTANCE SYSTEM FOR SUPPORTING AT LEAST ONE PERSON OUTSIDE OF A MOTOR VEHICLE
PROCÉDÉ DE FONCTIONNEMENT D'UN SYSTÈME D'ASSISTANCE DU CONDUCTEUR POUR L'ASSISTANCE D'AU MOINS UNE PERSONNE HORS DU VÉHICULE

(30) Priorität: 12.09.2015 DE 102015011930
(43) Veröffentlichungstag der Anmeldung: 15.03.2017
(73) Patentinhaber: AUDI AG, 85045 Ingolstadt (DE)
(72) Erfinder: Khlifi, Rachid, 85748 Garching (DE)

(56) Entgegenhaltungen:
- WO-A1-2008/121041
- WO-A1-2014/102178
- DE-A1-102014 001 321
- FR-A1- 3 006 794
- US-A1- 2005 275 505
- US-A1- 2008 088 462
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 31. Dezember 2010 (2010-12-31), Seiten 2746-2756, XP055088008, ISSN: 0018-9200, DOI: 10.1109/JSSC.2010.2075250

## Beschreibung

Die Erfindung betrifft ein Verfahren zum Betrieb eines Fahrerassistenzsystems zur Unterstützung von wenigstens einer Person außerhalb eines Kraftfahrzeugs durch Ansteuerung wenigstens eines Fahrzeugsystems zur Durchführung wenigstens einer Maßnahme, wobei das Kraftfahrzeug wenigstens einen Radarsensor aufweist. Daneben betrifft die Erfindung ein Kraftfahrzeug.

Für moderne Kraftfahrzeuge wurden bereits eine Vielzahl von Fahrerassistenzsystemen vorgeschlagen, die den Fahrer des Kraftfahrzeugs oder andere Personen in verschiedenen Situationen unterstützen sollen. Insbesondere dienen heutige Fahrerassistenzsysteme der Unterstützung des Fahrers beim Fahren und beim Parken. Fahrerassistenzsysteme treffen ihre Entscheidungen, ob Maßnahmen durchzuführen sind, meist auf Grundlage von Sensordaten von Umgebungssensoren des Kraftfahrzeugs, die beispielsweise genutzt werden können, um festzustellen, ob eine kritische Verkehrssituation vorliegt, bestimmte Vorgaben nicht eingehalten werden, Kollisionsgefahr droht oder dergleichen. Die Sensordaten werden dabei üblicherweise durch Maßnahmenkriterien ausgewertet, bei deren Erfüllung bestimmte Maßnahmen durch das Fahrerassistenzsystem durchgeführt werden, beispielsweise die Ausgabe von Informationen und/oder Warnungen an den Fahrer, Fahreingriffe und/oder die Anpassung von Betriebsparametern von Fahrzeugsystemen.

Nachdem Umgebungssensoren, insbesondere Radarsensoren, moderner Bauart meist äußerst leistungsfähig sind, benötigen diese eine hohe Menge an Energie für ihren Betrieb. Daher sind Umgebungssensoren üblicherweise deaktiviert, wenn auch der Motor deaktiviert ist bzw. die Zündung aus ist.

Das hat zur Folge, dass bestimmte Funktionen und Anwendungen, die von Sensordaten abhängig sind, nicht mehr zur Verfügung stehen, da die Umgebungssensoren nicht mehr aktiv sind. Auch bei einem Nachlauf-Betrieb, beispielsweise einem sogenannten "Klemme 30-Betrieb", bleiben die Umgebungssensoren aufgrund der hohen Stromaufnahme nur bis zu einer bestimmten Nachlaufzeit, beispielsweise 10 Minuten, aktiv. Danach folgt auch in diesem Fall eine Abschaltung.

Es wurden jedoch bereits Fahrerassistenzsysteme vorgeschlagen, die auch außerhalb des Betriebs des Kraftfahrzeugs, also bei ausgeschalteter Zündung/ausgeschaltetem Motor, Personen, insbesondere dem Fahrer, die sich außerhalb des Kraftfahrzeugs befinden, assistieren sollen. Beispielsweise ist es in diesem Zusammenhang bekannt, die Anwesenheit eines drahtlosen, dem Kraftfahrzeug zugeordneten Schlüssels zu detektieren, um dann diverse Beleuchtungsvorrichtungen des Kraftfahrzeugs zu aktivieren, um den Weg zum Kraftfahrzeug hin auszuleuchten. Neben einem drahtlosen Schlüssel können selbstverständlich auch andere Transponder genutzt werden, um automatisch Maßnahmen bei der Annäherung an ein Kraftfahrzeugs auszulösen, beispielsweise auch das Öffnen von Fahrzeugtüren und dergleichen. Beispielsweise beschreibt US 2008/0088462 A1 ein Verfahren zum Erlangen von Informationen über eine Person oder die Umgebung, in der sich diese bewegt, wobei die Information über ein mobiles Endgerät mit einem Sensor übertragen wird. Sensordaten des Sensors des Mobilgeräts können genutzt werden, um die Position des Mobilgeräts abzuschätzen, zudem ist es denkbar, von dem Mobilgerät empfangene Signale zur groben Lokalisierung des Mobilgeräts auszuwerten. Derartige Ausgestaltungen von Fahrerassistenzsystemen bringen einige Nachteile mit sich. So ist es zwar möglich, eine grobe Position eines Mobilgeräts und der es tragenden Person zu ermöglichen, jedoch ist die Art der Positionsbestimmung meist ungenau und unverlässlich, wobei zudem weitere Personen, die kein detektiertes Mobilgerät bei sich tragen, nicht erfasst werden können. Die Ungenauigkeit der erhaltenen/gelieferten Daten führt dazu, dass nur eine äußerst grobe, pauschalisierende Unterstützung stattfinden kann, beispielsweise eine Ausleuchtung in eine Richtung, von der sich das Mobilgerät nähert.

Der Erfindung liegt daher die Aufgabe zugrunde, ein demgegenüber präziser arbeitendes, mit weniger Aufwand zu realisierendes Fahrerassistenzsystem anzugeben.

Zur Lösung dieser Aufgabe ist bei einem Verfahren der eingangs genannten Art erfindungsgemäß vorgesehen, dass bei Detektion eines vorbestimmten, dem Kraftfahrzeug zugeordneten Mobilgeräts in einem Kommunikationsbereich des Kraftfahrzeugs durch eine Kommunikationseinrichtung des Kraftfahrzeugs der wenigstens eine Radarsensor aktiviert wird, wonach durch Auswertung der Radardaten wenigstens eine Positionsinformation zu wenigstens einer Person in der Umgebung des Kraftfahrzeugs umfassende Auswertungsdaten ermittelt werden, wobei bei Erfüllung eines die Auswertungsdaten auswertenden Maßnahmenkriteriums wenigstens eine dem Maßnahmenkriterium zugeordnete Maßnahme zur Unterstützung der Person ausgeführt wird.

Die Idee der vorliegenden Erfindung ist es, das Radarsystem des Kraftfahrzeugs auch bei ausgeschaltetem Kraftfahrzeug durch einen Trigger kurzzeitig aktivieren zu können, um eine verbesserte Unterstützung von Personen, die sich außerhalb des Kraftfahrzeugs befinden, zu gewährleisten. Das Triggerereignis zum Aktivieren der Radarsensoren ist dabei das Erkennen einer Annäherung eines Mobilgeräts, beispielsweise eines Smartphones, welches in den Kommunikationsbereich eingebracht wird. Dies löst, wie beschrieben, eine Aktivierung der Radarsensoren des Kraftfahrzeugs aus, die bevorzugt das gesamte Umfeld überwachen. Die Radarsensoren, welche zweckmäßig auf Halbleiter-Technologie basieren, liefern Radardaten, die die Aktivitäten um das Kraftfahrzeug hochgenau beschreiben können und auch über Positionsinformationen zu Personen außerhalb des Kraftfahrzeugs hinausgehende Informationen liefern können, beispielsweise Gesten, Bewegungswege und dergleichen. In diesem Kontext nutzt die Erfindung mithin aus, dass mittlerweile hochmoderne und hochgenau messende Radarsensoren entwickelt wurden, die auch im Nahbereich eine hervorragende Objekttrennung und Auflösung bieten können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleiter-Technologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Mithin sieht eine besonders bevorzugte Ausbildung der vorliegenden Erfindung vor, dass als der wenigstens eine Radarsensor ein einen einen Radartransceiver realisierenden Halbleiterchip, insbesondere CMOS-Chip, aufweisender Radarsensor verwendet wird. Ferner kann bevorzugt vorgesehen sein, dass durch den Halbleiterchip auch eine Steuereinheit und/oder eine digitale Signalverarbeitungskomponente des Radarsensors realisiert wird und/oder der Halbleiterchip und eine Antennenanordnung des Radarsensors als ein Package realisiert sind. Durch diese hochintegrierte Bauweise werden insbesondere Signalwege verkürzt, so dass ein hohes Signal-zu-RauschVerhältnis gegeben ist. Derartige, auf Halbleiter-Technologie basierende Radarsensoren, gegebenenfalls aber auch sonstige Radarsensoren, können mit besonderem Vorteil mit einer Frequenzbandbreite von mehr als 1 GHz, insbesondere von 4 GHz, und/oder in einem Frequenzbereich von 77 bis 81 GHz betrieben werden. Hohe Frequenzbandbreiten ermöglichen eine bessere Objekttrennung/Abstandstrennfähigkeit, so dass insgesamt die Radarsensoren auch im Nahbereich äußerst hochauflösende Radardaten liefern, die mithin optimal geeignet sind, um die Umgebung um das Kraftfahrzeug auf Personen zu überwachen und auf deren Handlungen außerhalb des Kraftfahrzeugs adäquat reagieren zu können.

Mit besonderem Vorteil werden mehrere, insbesondere acht, Radarsensoren verwendet, die die Umgebung des Kraftfahrzeugs in einem 360°-Winkelbereich abdecken. Nachdem auf Halbleiter-Technologie basierende Radarsensoren besonders kleinbauend sind, können diese verdeckt im Kraftfahrzeug verbaut werden, so dass beispielsweise vorgesehen sein kann, dass drei nach vorne gerichtete Radarsensoren in einem vorderen Stoßfänger, drei nach hinten gerichtete Radarsensoren in einem hinteren Stoßfänger und zwei seitlich ausgerichtete Radarsensoren in Türen des Kraftfahrzeugs verbaut sind. So wird eine 360°-Umgebungserfassung gewährleistet, die auch allgemein äußerst vorteilhaft ist.

Es sei an dieser Stelle noch angemerkt, dass selbstverständlich das Mobilgerät identifizierbar ist, um die zu einem anderen Zeitpunkt erfolgte Zuordnung zu dem Kraftfahrzeug zu überprüfen. Hierzu können insbesondere bekannte Zuordnungsverfahren aus bekannten Kommunikationsstandards eingesetzt werden.

Besonders bevorzugt ist es im Rahmen der vorliegenden Erfindung jedoch, wenn die Detektion des Mobilgeräts bei der Herstellung einer Kommunikationsverbindung, insbesondere einer Bluetooth-Kommunikationsverbindung, mit dem Mobilgerät erfolgt. Bei der Verwendung von Bluetooth ist es bekannt, einmalig die Verbindung zwischen dem Kraftfahrzeug und dem Mobilgerät, beispielsweise einem Smartphone, anzulernen, so dass ein "Pairing" zwischen den beiden Kommunikationsteilnehmern, also dem Kraftfahrzeug und dem Mobilgerät, stattfindet. Ab diesem Zeitpunkt kann die Kommunikationsverbindung zwischen dem Kraftfahrzeug und dem Mobilgerät automatisch hergestellt werden. Mithin erkennt das Kraftfahrzeug, hier die Bluetooth-Kommunikationseinrichtung, automatisch die Annäherung des Mobilgeräts, also dessen Eintritt in den Kommunikationsbereich, so dass ein Kommunikationskanal aufgebaut werden kann, der im Übrigen auch, wie im Folgenden noch näher dargestellt werden wird, für Zusatzfunktionen genutzt werden kann. Dabei nutzt die vorliegende Erfindung mit besonderem Vorteil aus, dass es mit modernen Bluetooth-Kommunikationseinrichtungen möglich ist, diese immer aktiv zu halten, wobei beispielsweise das Protokoll Bluetooth V 4.0 Low Energy eingesetzt werden kann. Nachdem die Herstellung der Kommunikationsverbindung automatisch erfolgt, mithin auch die Detektion des Mobilgeräts automatisch stattfindet, muss die das Mobilgerät bei sich führende Person nicht zwangsläufig die Unterstützung anstoßen, sondern es kann eine vollständige Automatisierung stattfinden, mithin maximaler Komfort für die zu unterstützenden Personen gegeben sein.

Nichtsdestotrotz kann auch vorgesehen sein, dass wenigstens eine Maßnahme seitens des Kraftfahrzeugs in Abhängigkeit von von dem Mobilgerät empfangenen, auf einer benutzerseitigen Eingabe basierenden Steuerdaten erfolgt. Dabei sind zwei grundsätzliche Ausgestaltungen denkbar, die auch kumulativ realisiert werden können. So kann zum einen vorgesehen sein, dass als Steuerdaten die grundsätzliche Freigabe von Maßnahmen seitens des Kraftfahrzeugs betreffende Freigabedaten verwendet werden. Beispielsweise kann nach der Herstellung der Kommunikationsverbindung beim Fahrer angefragt werden, ob die Unterstützungsfunktionen des Fahrerassistenzsystems gewünscht sind. Ist dies der Fall, kann er sie durch eine Eingabe auf dem Mobilgerät, beispielsweise einem Smartphone, freigeben, so dass Maßnahmen grundsätzlich erst nach Erhalt dieser die Freigabe beschreibenden Steuerdaten durchgeführt werden.

Zusätzlich oder alternativ kann vorgesehen sein, dass als Steuerdaten auf bestimmte gewünschte Maßnahmen bezogene Maßnahmendaten verwendet werden. Mithin kann im Rahmen einer derartigen Erweiterung des erfindungsgemäßen Betriebsverfahrens der Fahrer bzw. die sonstige Person, die das Mobilgerät bei sich führt, bestimmte Kommandos absetzen, beispielsweise das Öffnen/Schließen von Türen, umfassend auch die Heckklappe, anzuordnen und dergleichen. Entsprechende Aktoren, beispielsweise Aktoren elektrisch angetriebener Türen, werden dann entsprechend angesteuert.

In einer besonders vorteilhaften Weiterbildung der Erfindung kann vorgesehen sein, dass die Auswertung der Radardaten eine Gesten- und/oder Stellungserkennung für wenigstens ein Körperteil der wenigstens einen Person umfasst, wobei wenigstens ein Teil der Maßnahmen bestimmten Gesten und/oder Stellungen zugeordnet ist. Gerade bei der Verwendung von auf Halbleiter-Technologie basierenden Radarsensoren liegen äußerst hochauflösende Daten vor, aus denen auch weitere, vorteilhafte Eigenschaften/Handlungen der detektierten Personen geschlussfolgert werden können. Auf diese Weise ist es Personen im Umfeld des Kraftfahrzeugs möglich, über bestimmte Gesten Unterstützungsfunktionen auszulösen oder auch durch bestimmte Stellung/Positionierungen von Körperteilen Maßnahmen auszulösen. So kann beispielsweise vorgesehen sein, dass dann, wenn sich eine Person der Heckklappe nähert und ihren Fuß an einer bestimmten Stelle unter dem Kofferraum positioniert, als Maßnahme die Heckklappe geöffnet wird. Nähert sich in einem anderen Fall eine Person einer Tür des Kraftfahrzeugs und deutet auf dieselbe, so kann als Maßnahme die elektrisch angetriebene Tür geöffnet werden. Selbstverständlich sind auch eine Vielzahl anderer Ausführungsbeispiele denkbar, wie Gesten/Stellungen bestimmten Maßnahmen zugeordnet werden können.

Konkret kann vorgesehen sein, dass wenigstens eine Maßnahme ein Öffnen einer Tür des Kraftfahrzeugs und/oder ein Ausleuchten eines Aufenthaltsbereichs wenigstens einer der wenigstens einen Person und/oder eine Einstellung eines Sitzes des Kraftfahrzeugs betrifft. Es sind also eine Vielzahl von Ausgestaltungen denkbar, um Handlungen und Tätigkeiten außerhalb des Kraftfahrzeugs bzw. am Kraftfahrzeug durch Personen, die mittels der Radarsensoren detektiert werden, unterstützen. Türen, auf die sich Personen zubewegen, können automatisch geöffnet werden; wenn die Person identifiziert wird, kann zudem beispielsweise bereits aus einem dieser Person zugeordneten Profil eine Sitzeinstellung abgerufen und der Sitz für die Person vorbereitet werden. Über Beleuchtungsvorrichtungen des Kraftfahrzeugs kann der Weg der Person zu dem Kraftfahrzeug beleuchtet werden. Heckklappen können bei besonders bepackten Personen automatisch auf Annäherung geöffnet werden, so dass diese unmittelbar mit dem Einladen beginnen können.

Es kann vorgesehen sein, dass die Radarsensoren nach Ablauf einer vorbestimmten Zeitspanne, insbesondere im Bereich von 2 bis 4 Minuten, nach dem Aktivieren oder nach der letzten Detektion des Mobilgeräts im Kommunikationsbereich wieder deaktiviert werden. Beispielsweise ist es also denkbar, dass 2 oder 3 Minuten, nachdem die Radarsensoren aktiviert wurden oder nachdem das Mobilgerät wieder aus dem Kommunikationsbereich entfernt wurde, die Radarsensoren wieder in ihren stromsparenden, ausgeschalteten Zustand zurückgeführt werden.

Es sei an dieser Stelle nochmals angemerkt, dass ein besonderer Vorteil der vorliegenden Erfindung neben Radardaten, die spezielle, besser auf die Wünsche der Person abgestimmte Unterstützungsmaßnahmen erlauben, ist, dass auch weitere Personen, die nicht zwangsläufig ein dem Kraftfahrzeug zugeordnetes Mobilgerät mit sich führen müssen, detektiert, nachverfolgt und entsprechend unterstützt werden können. Nähert sich beispielsweise der Fahrer des Kraftfahrzeugs mit Familienmitgliedern dem Kraftfahrzeug, kann für alle diese eine Öffnung der Türen, eine Ausleuchtung des Weges und dergleichen erfolgen, ohne dass diese eigene Transponder mit sich führen müssen und mit deutlich erhöhter Genauigkeit.

Neben dem Verfahren betrifft die Erfindung auch ein Kraftfahrzeug, aufweisend wenigstens einen Radarsensor, eine Kommunikationseinrichtung und ein Fahrerassistenzsystem zur Unterstützung von wenigstens einer Person außerhalb des Kraftfahrzeugs, wobei das Fahrerassistenzsystem ein zur Durchführung des erfindungsgemäßen Verfahrens ausgebildetes Steuergerät aufweist. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen Radarsensor des Kraftfahrzeugs,
- Fig. 3: eine Skizze zur Erläuterung des erfindungsgemäßen Verfahrens.

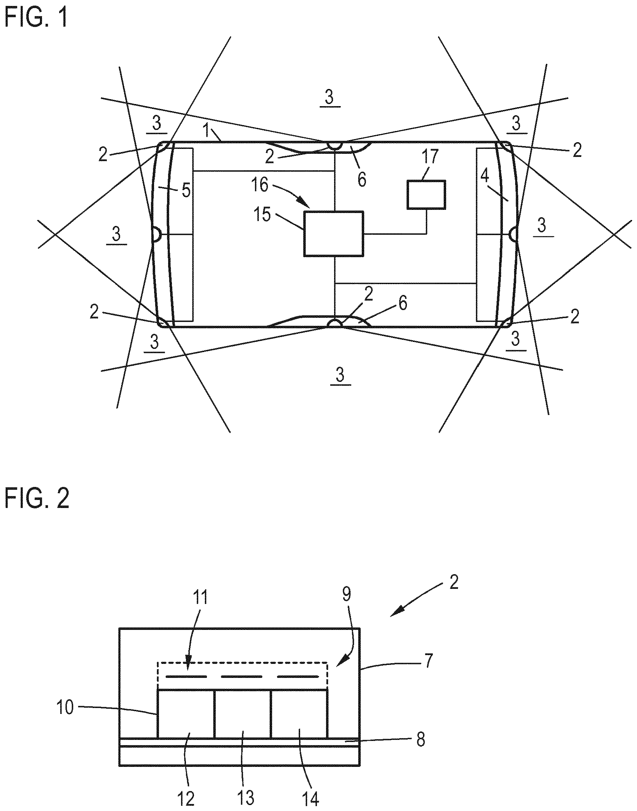

Fig. 1 zeigt eine Prinzipskizze eines erfindungsgemäßen Kraftfahrzeugs 1. Das Kraftfahrzeug 1 weist vorliegend acht als Weitwinkel-Radarsensoren ausgebildete Radarsensoren 2 auf, die auf Halbleiter-Technologie basieren, mithin kleinbauend realisiert sind und hochgenaue Radardaten über die Umgebung des Kraftfahrzeugs 1 liefern. Wie die in Fig. 1 ebenso angedeuteten Erfassungsbereiche 3 der Radarsensoren 2 andeuten, wird dabei ein 360°-Winkelbereich rund um das Kraftfahrzeug 1 abgedeckt.

Die kleinbauenden Radarsensoren 2 sind dabei verdeckt im Kraftfahrzeug 1 verbaut, wobei die drei nach vorne gerichteten Radarsensoren 2 in einem vorderen Stoßfänger 4, die drei nach hinten ausgerichteten Radarsensoren 2 in einem hinteren Stoßfänger 5 und die beiden seitlichen Radarsensoren 2 in einer Tür 6 des Kraftfahrzeugs 1 verbaut sind. Zum Verbau von Radarsensoren 2 in Türen 6 des Kraftfahrzeugs 1 kann in das Türblech ein radardurchlässiges Fenster eingesetzt sein, welches überlackiert wurde und somit unsichtbar ist.

Fig. 2 zeigt die Ausgestaltung der verwendeten Radarsensoren 2 genauer. Jeder Radarsensor 2 weist ein Gehäuse 7 auf, in dem eine Leiterplatte 8 gehaltert ist. Auf der Leiterplatte 8 ist ein Package 9 angeordnet, das durch einen hier als CMOS-Chip ausgebildeten Halbleiterchip 10 und eine Antennenanordnung 11 des Radarsensors 2 gebildet wird. Durch den Halbleiterchip 10 werden neben einem Radartransceiver 12 auch eine Steuereinheit 13 und eine digitale Signalverarbeitungskomponente 14 (DSP) des Radarsensors 2 realisiert. Um eine gute Abstandstrennfähigkeit und Radardatenqualität auch im Nahbereich zu ermöglichen, werden die Radarsensoren 2 vorliegend mit einer Frequenzbandbreite von 4 GHz in einem Frequenzbereich von 77 bis 81 GHz betrieben.

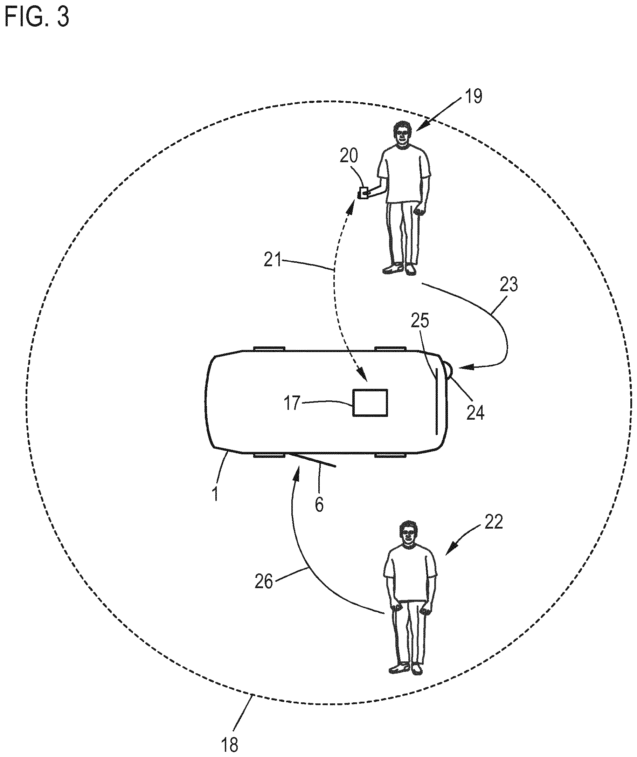

Die Radarsensoren 2 liefern ihre Radardaten an ein Steuergerät 15, welches vorliegend als Steuergerät 15 eines zentralen Fahrerassistenzsystems ausgebildet ist, mithin Sensordaten aller Umgebungssensoren des Kraftfahrzeugs 1 sammelt, diese für Funktionen verschiedener Fahrerassistenzsysteme aufbereitet und die entsprechenden Funktionen auch selbst ausführt. Mithin ist das Steuergerät 15 vorliegend auch einem Fahrerassistenzsystem 16 zur Unterstützung von Personen außerhalb des Kraftfahrzeugs (bei abgeschaltetem Kraftfahrzeug, also Zündung und Motor aus) zugeordnet. Bei Abschaltung des Kraftfahrzeugs 1 werden vorliegend auch die einen hohen Energiebedarf aufweisenden Radarsensoren 2 abgeschaltet. Das Steuergerät 15 ist jedoch mit einer Bluetooth-Kommunikationseinrichtung 17 verbunden. Beim Herstellen einer Kommunikationsverbindung mit einem dem Kraftfahrzeug 1 zugeordneten Mobilgerät im Kommunikationsbereich gibt sie ein entsprechendes Signal an das Steuergerät 15 weiter, welches die Radarsensoren 2 temporär aktiviert, um die Funktionen des Fahrerassistenzsystems 16 zur Verfügung stellen zu können. Mit anderen Worten ist das Steuergerät 15 zur Durchführung des erfindungsgemäßen Verfahrens ausgebildet, welches nun im Hinblick auf die Fig. 3 näher erläutert werden soll.

Gezeigt ist schematisch das Kraftfahrzeug 1 mit dem Kommunikationsbereich 18 der Kommunikationseinrichtung 17. Die Kommunikationseinrichtung 17 nutzt das Protokoll Bluetooth V 4.0 Low Energy, so dass mithin die Bluetooth-Konnektivität grundsätzlich zur Verfügung steht. Betritt nun eine Person 19 mit einem Mobilgerät 20, hier einem Smartphone, den Kommunikationsbereich 18, wird dann, wenn bereits einmal manuell eine Verbindung zwischen dem Kraftfahrzeug 1 und dem Mobilgerät 20 hergestellt wurde, mithin ein "Pairing" vorliegt, das das Mobilgerät 20 dem Kraftfahrzeug 1 zuordnet, vollständig automatisch eine Kommunikationsverbindung 21 (Bluetooth-Verbindung) aufgebaut, wodurch auch die Gegenwart des Mobilgeräts 20 im Kommunikationsbereich 18 detektiert wird. Diese Information wird an das Steuergerät 15 weitergeleitet, welches wiederum vollständig automatisch die Radarsensoren 2 aktiviert und aufgrund der Radardaten das Umfeld des Kraftfahrzeugs 1 hinsichtlich von Personen 19, 22 überwacht. Die Radardaten der Radarsensoren 2 werden ausgewertet, um die Bewegungen der Personen 19, 22 um das Kraftfahrzeug herum nachzuverfolgen. Sind bestimmte Maßnahmenkriterien erfüllt, die die bei der Auswertung der Radardaten entstehenden Auswertungsdaten auswerten, welche sich wenigstens auf die Position der Personen 19, 22 beziehen, werden entsprechende, den Maßnahmenkriterien zugeordnete Maßnahmen ausgeführt. Beispielsweise wird dann, wenn die Möglichkeit zur Ausleuchtung eines Bereiches um die Position einer Person 19, 22 besteht, wenigstens eine Beleuchtungsvorrichtung des Kraftfahrzeugs, welche der Übersichtlichkeit halber nicht dargestellt ist, zum Ausleuchten des entsprechenden Aufenthaltsbereichs angesteuert.

Bewegt sich im gezeigten Ausführungsbeispiel die Person 19 entlang des Weges 23 zu einer neuen Position und stellt ihren Fuß in einem speziellen Fußabstellbereich 24 unterhalb des Kofferraums des Kraftfahrzeugs 1 ab, wird aufgrund der hochauflösenden Radardaten diese Stellung/Gestik erkannt, welche der Maßnahme "Öffnen der Heckklappe" zugeordnet ist, so dass entsprechend die Heckklappe 25 über einen entsprechenden elektrischen Aktor aufgefahren wird. Es ist auch denkbar, dass die reine Annäherung an die Heckklappe 25 bereits ausreichend ist, um diese öffnen zu lassen.

Die Person 22 bewegt sich auf dem Weg 26 auf eine Tür 6 des Kraftfahrzeugs 1 zu, was anhand der Radardaten ebenso erkannt wird und zu einem automatischen Öffnen der Tür 6 führt. Auch hier ist es denkbar, Gesten zu verwenden, beispielsweise ein Deuten der Person 22 auf die Tür oder dergleichen. Zu den hier beispielhaft dargestellten Unterstützungsmöglichkeiten sind selbstverständlich auch eine Vielzahl weiterer Möglichkeiten denkbar, die durch das hier beschriebene Fahrerassistenzsystem 16 realisiert werden können.

Es sei noch angemerkt, dass die Radarsensoren 2 nach Ablauf einer vorbestimmten Zeitspanne, beispielsweise von zwei oder drei Minuten, nachdem sie aktiviert wurden oder nachdem das Mobilgerät 20 den Kommunikationsbereich 18 wieder verlässt, wieder deaktiviert werden, was entsprechend dann auch für die Funktionen des Fahrerassistenzsystems 16 gilt. Ferner kann vorgesehen sein, dass von dem Mobilgerät 20 Maßnahmen betreffende Steuerdaten an das Steuergerät 15 übermittelt werden, beispielsweise betreffend die grundsätzliche Freigabe von Maßnahmen oder die Durchführung einer gewünschten Maßnahme.

## Patentansprüche

1. Verfahren zum Betrieb eines Fahrerassistenzsystems (16) zur Unterstützung von wenigstens einer Person (19, 22) außerhalb eines Kraftfahrzeugs (1) durch Ansteuerung wenigstens eines Fahrzeugsystems zur Durchführung wenigstens einer Maßnahme, wobei das Kraftfahrzeug (1) wenigstens einen Radarsensor (2) aufweist,
**dadurch gekennzeichnet,**
**dass** bei Detektion eines vorbestimmten, dem Kraftfahrzeug (1) zugeordneten Mobilgeräts (20) in einem Kommunikationsbereich (18) des Kraftfahrzeugs (1) durch eine Kommunikationseinrichtung (17) des Kraftfahrzeugs (1) der wenigstens eine Radarsensor (2) aktiviert wird, wonach durch Auswertung der Radardaten wenigstens eine Positionsinformation zu wenigstens einer Person (19, 22) in der Umgebung des Kraftfahrzeugs (1) umfassende Auswertungsdaten ermittelt werden, wobei bei Erfüllung eines die Auswertungsdaten auswertenden Maßnahmenkriteriums wenigstens eine dem Maßnahmenkriterium zugeordnete Maßnahme zur Unterstützung der Person (19, 22) ausgeführt wird.

2. Verfahren nach Anspruch 1,
**dadurch gekennzeichnet,**
**dass** als der wenigstens eine Radarsensor (2) ein einen einen Radartransceiver (12) realisierenden Halbleiterchip (10), insbesondere CMOS-Chip, aufweisender Radarsensor (2) verwendet wird.

3. Verfahren nach Anspruch 2,
**dadurch gekennzeichnet,**
**dass** durch den Halbleiterchip (10) auch eine Steuereinheit (13) und/oder eine digitale Signalverarbeitungskomponente (14) des Radarsensors (2) realisiert wird und/oder der Halbleiterchip (10) und eine Antennenanordnung (11) des Radarsensors (2) als ein Package (9) realisiert sind.

4. Verfahren nach einem der vorangehenden Ansprüche,
**dadurch gekennzeichnet,**
**dass** der wenigstens eine Radarsensor (2) mit einer Frequenzbandbreite von mehr als einem GHz, insbesondere von 4 GHz, und/oder in einem Frequenzbereich von 77 bis 81 GHz betrieben wird.

5. Verfahren nach einem der vorangehenden Ansprüche,
**dadurch gekennzeichnet,**
**dass** mehrere, insbesondere acht, Radarsensoren (2) verwendet werden, die die Umgebung des Kraftfahrzeugs (1) in einem 360°-Winkelbereich abdecken.

6. Verfahren nach einem der vorangehenden Ansprüche,
**dadurch gekennzeichnet,**
**dass** die Detektion des Mobilgeräts (20) bei der Herstellung einer Kommunikationsverbindung (21), insbesondere einer Bluetooth-Kommunikationsverbindung (21), mit dem Mobilgerät (20) erfolgt.

7. Verfahren nach Anspruch 6,
**dadurch gekennzeichnet,**
**dass** wenigstens eine Maßnahme seitens des Kraftfahrzeugs (1) in Abhängigkeit von von dem Mobilgerät (20) empfangenen, auf einer benutzerseitigen Eingabe basierenden Steuerdaten erfolgt.

8. Verfahren nach Anspruch 7,
**dadurch gekennzeichnet,**
**dass** als Steuerdaten die grundsätzliche Freigabe von Maßnahmen seitens des Kraftfahrzeugs (1) betreffende Freigabedaten und/oder auf bestimmte gewünschte Maßnahmen bezogene Maßnahmendaten verwendet werden.

9. Verfahren nach einem der vorangehenden Ansprüche,
**dadurch gekennzeichnet,**
**dass** die Auswertung der Radardaten einen Gesten- und/oder Stellungserkennung für wenigstens ein Körperteil der wenigstens einen Person (19, 22) umfasst, wobei wenigstens ein Teil der Maßnahmen bestimmten Gesten und/oder Stellungen zugeordnet sind.

10. Verfahren nach einem der vorangehenden Ansprüche,
**dadurch gekennzeichnet,**
**dass** wenigstens eine Maßnahme ein Öffnen einer Tür (6) des Kraftfahrzeugs (1) und/oder ein Ausleuchten eines Aufenthaltsbereichs wenigstens einer der wenigstens einen Person (19, 22) und/oder eine Einstellung eines Sitzes des Kraftfahrzeugs (1) betrifft.

11. Kraftfahrzeug (1), aufweisend wenigstens einen Radarsensor (2), eine Kommunikationseinrichtung und ein Fahrerassistenzsystem (16) zur Unterstützung von wenigstens einer Person (19, 22) außerhalb des Kraftfahrzeugs (1), wobei das Fahrerassistenzsystem (16) ein zur Durchführung eines Verfahrens nach einem der vorangehenden Ansprüche ausgebildetes Steuergerät (15) aufweist.

## Claims

1. Method for operating a driver assistance system (16) for supporting at least one person (19, 22) outside a motor vehicle (1) by controlling at least one vehicle system for performing at least one task, wherein the motor vehicle (1) comprises at least one radar sensor (2), **characterised in that** on the detection of a designated mobile device (20) assigned to the motor vehicle (1) in a communication area (18) of the motor vehicle (1) the at least one radar sensor (2) is activated by a communication device (17) of the motor vehicle (1), after which by evaluating the radar data at least one item of position information is communicated to at least one person (19, 22) in the surrounding area of the motor vehicle (1), wherein if a task criterion evaluating the evaluation data is met at least one task assigned to the task criterion is performed for supporting the person (19, 22).

2. Method according to claim 1, **characterised in that** a radar sensor (2) comprising a semi-conductor chip (10) forming a radar transceiver (12), in particular a CMOS chip, is used as the at least one radar sensor (2).

3. Method according to claim 2, **characterised in that** also a control unit (13) and/or a digital signal processing component (14) of the radar sensor (2) is formed by the semi-conductor chip (10) and/or the semi-conductor chip (10) and an antenna arrangement (11) of the radar sensor (2) are configured as a package (9).

4. Method according to any of the preceding claims, **characterised in that** the at least one radar sensor (2) is operated at a frequency bandwidth of more than one GHz, in particular 4 GHz, and/or in a frequency range of 77 to 81 GHz.

5. Method according to any of the preceding claims, **characterised in that** a plurality of radar sensors (2) are used, in particular eight, which cover the surrounding area of the motor vehicle (1) in a 360° angle range.

6. Method according to any of the preceding claims, **characterised in that** the detection of the mobile device (20) is performed by the mobile device (20) during the establishment of a communication connection (21), in particular a Bluetooth communication connection (21).

7. Verfahren according to claim 6, **characterised in that** at least one task is performed on the part of the motor vehicle (1) as a function of control data received by the mobile device (20) based on input by the user.

8. Method according to claim 7, **characterised in that** release data relating to the general release of tasks on the part of the motor vehicle (1) and/or task data relating to specifically desired tasks are used as the control data.

9. Method according to any of the preceding claims, **characterised in that** the evaluation of the radar data comprises gesture and/or position recognition for at least one body part of the at least one person (19, 22), wherein at least a portion of the tasks are assigned to specific gestures and/or positions.

10. Method according to any of the preceding claims, **characterised in that** at least one task relates to opening a door (6) of the motor vehicle (1) and/or illuminating an area occupied by at least one of the at least one persons (19, 22) and/or to an adjustment of a seat of the motor vehicle (1).

11. Motor vehicle (1), comprising at least one radar sensor (2), a communication device and a driver assistance sensor (16) for supporting at least one person (19, 22) outside the motor vehicle (1), wherein the driver assistance sensor (16) comprises a control device (15) designed for performing a method according to any of the preceding claims.

## Revendications

1. Procédé servant à faire fonctionner un système d'assistance au conducteur (16) servant à assister au moins une personne (19, 22) à l'extérieur d'un véhicule automobile (1) en pilotant au moins un système de véhicule servant à mettre en oeuvre au moins une mesure, dans lequel le véhicule automobile (1) présente au moins un capteur radar (2),
**caractérisé en ce**
**que** lors de la détection d'un appareil mobile (20) prédéfini associé au véhicule automobile (1) dans une zone de communication (18) du véhicule automobile (1) par un dispositif de communication (17) du véhicule automobile (1), l'au moins un capteur radar (2) est activé, des données d'analyse comprenant au moins une information de position concernant au moins une personne (19, 22) dans l'environnement du véhicule automobile (1) étant après quoi déterminées par l'analyse des données radar, dans lequel lorsqu'un critère de mesure analysant les données d'analyse est rempli, au moins une mesure associée au critère de mesure est exécutée pour assister la personne (19, 22).

2. Procédé selon la revendication 1,
**caractérisé en ce**
**qu'**un capteur radar (2) présentant une puce semi-conductrice (10) réalisant un émetteur-récepteur radar (12), en particulier une puce CMOS, est utilisé en tant que l'au moins un capteur radar (2).

3. Procédé selon la revendication 2,
**caractérisé en ce**
**qu'**également une unité de commande (13) et/ou un composant de traitement de signaux (14) numérique du capteur radar (2) sont réalisées par la puce semi-conductrice (10), et/ou la puce semi-conductrice (10) et un ensemble formant antenne (11) du capteur radar (2) sont réalisés sous la forme d'un package (9).

4. Procédé selon l'une quelconque des revendications précédentes,
**caractérisé en ce**
**que** l'au moins un capteur radar (2) fonctionne avec une largeur de bande de fréquence supérieure à 1 GHz, en particulier de 4 GHz, et/ou dans une plage de fréquences allant de 77 à 81 GHz.

5. Procédé selon l'une quelconque des revendications précédentes,
**caractérisé en ce**
**que** sont utilisés plusieurs capteurs radars (2), en particulier huit, qui couvrent l'environnement du véhicule automobile (1) dans une plage angulaire de 360°.

6. Procédé selon l'une quelconque des revendications précédentes,
**caractérisé en ce**
**que** la détection de l'appareil mobile (20) est effectuée lors de l'établissement d'une liaison de communication (21), en particulier d'une liaison de communication Bluetooth (21), avec l'appareil mobile (20).

7. Procédé selon la revendication 6,
**caractérisé en ce**
**qu'**au moins une mesure est effectuée du côté du véhicule automobile (1) en fonction de données de commande reçues de l'appareil mobile (20), basées sur une entrée du côté de l'utilisateur.

8. Procédé selon la revendication 7,
**caractérisé en ce**
**que** sont utilisées en tant que données de commande des données de validation concernant la validation de base de mesures du côté du véhicule automobile (1) et/ou des données de mesure se rapportant à certaines mesures souhaitées.

9. Procédé selon l'une quelconque des revendications précédentes,
**caractérisé en ce**
**que** l'analyse des données radars comprend une identification de gestes et/ou de positions pour au moins une partie du corps de l'au moins une personne (19, 22), dans lequel au moins une partie des mesures sont associées à certains gestes et/ou certaines positions.

10. Procédé selon l'une quelconque des revendications précédentes,
**caractérisé en ce**
**qu'**au moins une mesure concerne une ouverture d'une porte (6) du véhicule automobile (1) et/ou un éclairage d'une zone de séjour d'au moins l'une de l'au moins une personne (19, 22) et/ou un réglage d'un siège du véhicule automobile (1).

11. Véhicule automobile (1), présentant au moins un capteur radar (2), un dispositif de communication et un système d'assistance au conducteur (16) servant à assister au moins une personne (19, 22) à l'extérieur du véhicule automobile (1), dans lequel le système d'assistance au conducteur (16) présente un appareil de commande (15) réalisé pour mettre en oeuvre un procédé selon l'une quelconque des revendications précédentes.
